# EUROPÄISCHE PATENTANMELDUNG

(11) **EP 3 026 415 A1**
(43) Veröffentlichungstag der Anmeldung: **01.06.2016**
(21) Anmeldenummer: 15200066.7
(22) Anmeldetag: 18.06.2010
(51) Int. Cl.: G01M 15/10

(54) **MESSGERÄT ZUR ABGASMESSUNG**

(30) Priorität: 09.07.2009 DE 102009027599
(62) Teilanmeldung aus: 10724524.3
(71) Anmelder: MAHA Maschinenbau Haldenwang GmbH & Co. KG, 87490 Haldenwang (DE)
(72) Erfinder: KESEBERG, Engelbert, 87435 Kempten (DE); TSCHINKEL, Elmar, 87448 Waltenhofen (DE); KNOX, Gunther, 87781 Ungerhausen (DE); DAMBIETZ, Jens, 87490 Haldenwang (DE)
(74) Vertreter: MERH-IP Matias Erny Reichl Hoffmann Patentanwälte PartG mbB

(57) **Zusammenfassung**

Die Erfindung betrifft ein Messgerät zur Abgasmessung von Kraftfahrzeugen, dass eine kombinierte Messung der Rauchgastrübung, der Partikelkonzentration, sowie des CO-, CO₂-, HC-, O₂, NO, NO₂, NOₓ- und NH₃ - Abgasanteils ermöglicht. Das Messgerät kann zumindest ein Gehäuse, zumindest ein Anzeige-Display zur Anzeige von Messwerten, zumindest eine Spannungsversorgung, zumindest eine Abgassonde 10 zum Einleiten von Messgas in das Messgerät und zumindest einen Wasserabscheider 17, der stromab des an der Abgassonde 10 eingeleiteten Messgases angeordnet sein kann, aufweisen.

## Beschreibung

Die Erfindung betrifft ein Messgerät zur Abgasmessung von Kraftfahrzeugen, das unter anderem eine kombinierte Messung der Rauchgastrübung, der Partikelkonzentration, sowie des CO-, CO₂-, HC-, O₂, NO, NO₂, NOₓ- und NH₃ - Abgasanteils und somit eine Verkürzung der Messzeitdauer ermöglicht.

Messgeräte zur Abgasmessung von Kraftfahrzeugen werden zur Prüfung und Diagnose von Kraftfahrzeugabgasen eingesetzt. Aufgrund der zunehmend strengeren Abgasvorschriften gemäß beispielsweise Euro 4 bzw. 5 sind aus dem Stand der Technik unterschiedliche Abgasmessgeräte für Kraftfahrzeuge bekannt. Beispielsweise messen sogenannte 4- bzw. 5- Gas Abgasmessgeräte für benzin- und gasbetriebene Ottomoren mittels einer IR-Messbank die Gase CO, CO₂, HC, O₂ bzw. NO. Diesel-Abgastester (Opazimeter) messen mit einem Lichttrübungsmessverfahren die Rauchgastrübung. Andere Abgasmessgeräte, sogenannte Partikelmessgeräte, messen den Partikelanteil im Diesel- und Benzinabgas. Weiterhin sind Geräte bekannt, die den NO, NO₂ bzw. NOₓ Gehalt im Abgas messen, oder Geräte die den NH₃-Anteil messen.

Die Verwendung unterschiedlicher Messgeräte führt jedoch zu einer langen Messzeitdauer, wenn beispielsweise unterschiedliche Messungen am selben Fahrzeug durchgeführt werden müssen, da für jede Messung ein anderes Gerät angeschlossen und bedient werden muss. Ein weiterer Nachteil ist die umständliche Handhabung mehrerer Geräte im mobilen Einsatz, beispielsweise bei mobilen Abgasprüfstellen. Ein weiterer Nachteil sind die hohen Herstellungskosten, da Abgasmessgeräte für unterschiedliche Abgasmessungen zum Teil ähnliche funktionale Komponenten erfordern, wie beispielsweise eine Abgassonde, ein Anzeige-Display, ein Gehäuse oder eine Pumpe mit Pumpenmotor.

Es ist deshalb eine Aufgabe der vorliegenden Erfindung, ein Messgerät zur Abgasmessung von Kraftfahrzeugen bereitzustellen, das eine reduzierte Abgasmesszeitdauer bei der Anwendung mehrerer unterschiedlicher Abgasmessverfahren ermöglicht. Diese Aufgabe wird durch ein Messgerät zur Abgasmessung gemäß den Merkmalen des Patentanspruchs 1 gelöst. Die abhängigen Patentansprüche betreffen vorteilhafte Ausgestaltungen der Erfindung.

Das erfindungsgemäße Messgerät zur Bestimmung von mehreren Abgaskomponenten im Abgas von Verbrennungsmotoren kann zumindest ein Gehäuse, zumindest ein Anzeige-Display, bevorzugt zur Anzeige von Messwerten, und zumindest eine Spannungsversorgung, sowie zumindest eine Abgassonde zum Einleiten von Messgas in das Messgerät und zumindest einen Wasserabscheider, der stromab des an der Abgassonde eingeleiteten Messgases angeordnet sein kann, aufweisen.

Der erfindungsgemäße Aufbau ermöglicht damit das Verwenden der gleichen Messgerätskomponenten für unterschiedliche Abgasmessarten, wobei nur eine Abgassonde, ein Wasserabschneider, eine Spannungsversorgung, ein Gehäuse, und ein Anzeige-Display erforderlich ist, wodurch eine kompaktere und günstigere Bauweise ermöglich wird. Besonders vorteilhaft ist ebenfalls, dass der Benutzer nicht mehr unterschiedliche Messgeräte für verschiedene Abgasmessarten bedienen muss, sondern nur noch ein Gerät, was die Bediensicherheit erhöht.

Ferner kann das Messgerät zur Bestimmung von mehreren Abgaskomponenten im Abgas von Verbrennungsmotoren umfassen: eine Abgassonde, eine Partikelmesskammer, einen Feinfilter, einen Wasserabscheider, eine Infrarot-Messbank, einen O₂-Sensor und einen Gasauslass.

Ferner kann das Abgasmessgerät insbesondere durch eine erfindungsgemäße Anordnung der vorgenannten Bauteile gekennzeichnet sein, die bevorzugt derart sein kann, dass ein Messgas über die Abgassonde eintritt, dann in die Partikelmesskammer geleitet wird, dann in den Feinfilter geleitet wird, dann in den Wasserabscheider geleitet wird, dann in die Infrarot-Messbank geleitet wird, dann zu dem O₂-Sensor geleitet wird, und schließlich über den Gasauslass wieder in die Umgebung austritt.

Die erfindungsgemäße Kombination und Anordnung der Messgerätkomponenten ermöglicht ein multifunktionales Abgasmessgerät für alle gängigen Abgasmessarten. Erfindungsgemäß erfolgt die Messung von mehreren Abgaskomponenten auf Basis einer definierten Abgasvolumeneinheit. Mit anderen Worten werden anhand einer bestimmten Abgasvolumeneinheit, die durch die erfindungsgemäße Anordnung der Messkomponenten geleitet wird, die verschiedenen Abgaskomponenten und Messungen durchgeführt. Besonders vorteilhaft ist, das die Messung damit quasi-simultan erfolgt, da die definierte Volumeneinheit beispielsweise in wenigen Sekundenbruchteilen von der Messung in der Partikelmesskammer zur Messung in die IR-Messkammer geleitet wird. Die Messung aller Messwerte kann jedoch auch gleichzeitig erfolgen.

Dies führt zu einer kürzeren Abgasmesszeit, da mehrere Messungen mit einem Gerät quasi-simultan durchgeführt werden können; dadurch reduzieren sich die Installationszeiten (z.B. nur einmaliges Anbringen der Abgassonde) sowie die Messzeiten, da der gleiche Abgasstrom für mehrere Messungen genutzt werden kann, indem er erst durch die Partikelmesskammer, dann durch die IR-Messbank und dann zum O₂-Sensor geleitet wird. Die quasi-simultane Messung verschiedener Abgaswerte erlaubt die gleichzeitige Anzeige aller gemessenen Werte in Echtzeit und deren Verfolgung im Zeitverlauf. Dies ist besonders vorteilhaft, da die Änderung einer Fahrzeug- bzw. Motorabstimmung zur Korrektur eines Abgaswertes zur gleichzeitigen Veränderungen eines anderen Abgaswertes führen kann. Diese Abhängigkeiten können durch die Erfindung in Echtzeit gemessen und kontrolliert werden und ermöglichen damit eine schnelle, effiziente Einstellung der Abgaswerte. Mittels herkömmlicher getrennter Messverfahren können diese wechselseitigen Abhängigkeiten der verschiedenen Abgaswerte von der Fahrzeugeinstellung nur schwierig und unter hohem Zeitaufwand erkannt und korrigiert werden.

Der erfindungsgemäße Aufbau ermöglicht das Verwenden der gleichen Messgerätskomponenten für unterschiedliche Abgasmessarten, beispielsweise ist nur eine Abgassonde, ein Wasserabschneider, eine Spannungsversorgung, ein Gehäuse, und ein Anzeige-Display erforderlich, wodurch eine kompaktere und günstigere Bauweise ermöglich wird. Besonders vorteilhaft ist ebenfalls, dass der Benutzer nicht mehr unterschiedliche Messgeräte für verschiedene Abgasmessarten bedienen muss, sondern nur noch ein Gerät, was die Bediensicherheit erhöht.

Vorzugsweise misst die Partikelmesskammer die Messgas-Partikelkonzentration (Massenkonzentration) mittels eines Laserstreulichtverfahrens. Der Einsatz eines Laserstreulichtverfahrens für eine Abgasmessung ermöglicht eine wesentlich kompaktere Bauweise der Partikelmesskammer, wobei beispielsweise die Partikelmesszelle zylinderförmig mit einer Höhe von 8 cm und einem Querdurchmesser 4 cm ausgebildet sein kann.

Vorzugsweise wird ein K-Wert für die Opazität des Messgases mittels eines linearen Umrechnungsverfahrens aus einem durch die Partikelmesskammer ermittelten Messgas-Partikelkonzentrationswertes ermittelt. Dadurch kann mittels der Partikelmesskammer auch gleichzeitig die Opazität ermittelt werden und vermeidet dadurch ein separates Opazimeter, wodurch eine kompaktere und kostengünstigere Bauweise ermöglicht wird. Die Erfinder haben bei Versuchsreihen festgestellt, dass die Messwerte der erfindungsgemäßen Partikelmesskammer linear mit dem K-Wert für die Opazität des Messgases korreliert sind. Daher können aus dem von der Partikelmesskammer mittels des Laserstreulichtverfahrens aufgenommenen Messwerte auch zur Bestimmung der Opazität verwendet werden. Dadurch kann eine zusätzliche zeitaufwendige Opazitätsmessung vermieden werden. Gewöhnlich wird die Dieselabgasuntersuchung mittels einer Trübungsmessung ermittelt, wobei mit einer grünen LED der Abgasstrahl in einer Messkammer der Länge von ca. 43 cm beleuchtet und vermessen wird. Durch die erfindungsgemäße Partikelmesskammer und die Berechnung der Opazität aus der gemessenen Massenkonzentration kann eine große, zusätzliche Messzelle zur Trübungsmessung vermieden werden.

Vorzugsweise umfasst das Messgerät weiter einen Pumpenmotor, eine Messgaspumpe und eine Wasserabscheiderpumpe, wobei der Pumpenmotor die Messgaspumpe und die Wasserabscheiderpumpe antreibt. Dadurch können die Pumpe und der Motor für unterschiedliche Messarten genutzt werden, wohingegen bei aus der einschlägigen Technik bekannten separaten Messgeräten jeweils eine separate Messgaspumpe, eine Wasserabscheiderpumpe und ein Pumpenmotor für die 4-/5-Gas-Messung, die Opazitäts-Messung, und die Partikelmessung benötigt wird.

Vorzugsweise ist die Messgaspumpe in einer Messgasleitung zwischen dem Wasserabscheider und der Infrarot-Messbank angeordnet. Vorzugsweise sind die Messgasumpe und die Wasserabscheiderpumpe als Doppelmembranpumpen ausgebildet.

Vorzugsweise wird das Messgas nach der IR-Messbank zu einem NO-Sensor, einem NO₂-Sensor, und/oder einem NH₃-Sensor geleitet, die zu dem O₂-Sensor parallel geschaltet sind.

Vorzugsweise durchläuft das Messgas vor Eintritt in die Partikelmesskammer ein Heizelement. Die Erfinder haben bei der Entwicklung der erfindungsgemäßen Partikelmesskammer mittels eines Laserstreulichtverfahrens den Effekt beobachtet, dass durch Kondensationströpfchen im Abgasstrom optische Störeffekte bei der laserbasierten Partikelmessung entstehen können. Diese Störeffekte können durch ein vorangeschaltetes Heizelement durch Erwärmen des Abgasstroms zuverlässig vermieden werden.

Zusammenfassend wird durch die vorliegende Erfindung ein Messgerät zur quasisimultanen Messung unterschiedlicher Abgaskomponenten von Verbrennungsmotoren, wie die Rauchgastrübung, die Partikelkonzentration, sowie des CO-, CO₂-, HC-, O₂, NO, NO₂, NOₓ - und NH₃ - Abgasanteils, ermöglicht.

Hierbei ist die erfindungsgemäße Kombination und Anordnung der Messgerätkomponenten und die Verschlauchung (Anordnung der Leitungen) entscheidend. Beispielsweise stellt die Anordnung des Wasserabscheiders stromab der Partikelmesskammer und stromauf der IR-Messbank zuverlässig sicher, dass einerseits das Messgas von für die IR-Messung störender Feuchtigkeit und Partikeln bereinigt wird, andererseits vermeidet es, das die Partikelkonzentration durch den Wasserabscheider verändert wird, bevor diese in der Partikelmesskammer gemessen wurde. Weiterhin erlaubt die erfindungsgemäße Anordnung und Verschlauchung, das zur zur Messung der Rauchgastrübung, der Partikelkonzentration, sowie des CO-, CO₂-, HC-, O₂, NO, NO₂, NOₓ-und NH₃ - Abgasanteils nur insgesamt ein Pumpenmotor, eine Messgaspumpe und eine Wasserabscheiderpumpe benötigt wird.

Im Gegensatz zu den marktüblichen Messgeräten, ermöglicht das erfindungsgemäße Kombinationsgerät eine signifikant verkürzte Abgasmesszeit und erleichtert die Handhabung des Geräts im mobilen Einsatz als auch im Werkstatt-Einsatz. Weiterhin können baugleiche oder ähnliche Komponenten des Messgeräts eingespart werden, da für das erfindungsgemäße Messgerät nur eine Abgassonde, ein Wasserabscheider, eine Spannungsversorgung, ein Gehäuse und ein Anzeige-Display notwendig sind. Die erfindungsgemäße Verwendung eines Laserstreuchlichtverfahrens zur Bestimmung der Massenkonzentration und der Berechnung der Opazität aus der Massenkonzentration ermöglicht weiterhin eine sehr kompakte Bauweise durch die laser-basierte Messzelle und durch Einsparung einer separaten Opazitäts-Messeinheit.

Bevorzugte Ausführungsformen der vorliegenden Erfindung werden im Folgenden unter Bezugnahme auf die beigefügte Zeichnung näher beschrieben.
Fig. 1 zeigt schematisch einen Aufbau eines erfindungsgemäßen Messgeräts gemäß einem Ausführungsbeispiel der vorliegenden Erfindung;
Fig. 2 zeigt beispielhaft die Abhängigkeit der Massenkonzentration von dem Laserstreulicht der Partikelmesskammer und beispielhaft den linearen Zusammenhang des K-Wertes der Opazität von der gemessenen Massenkonzentration.

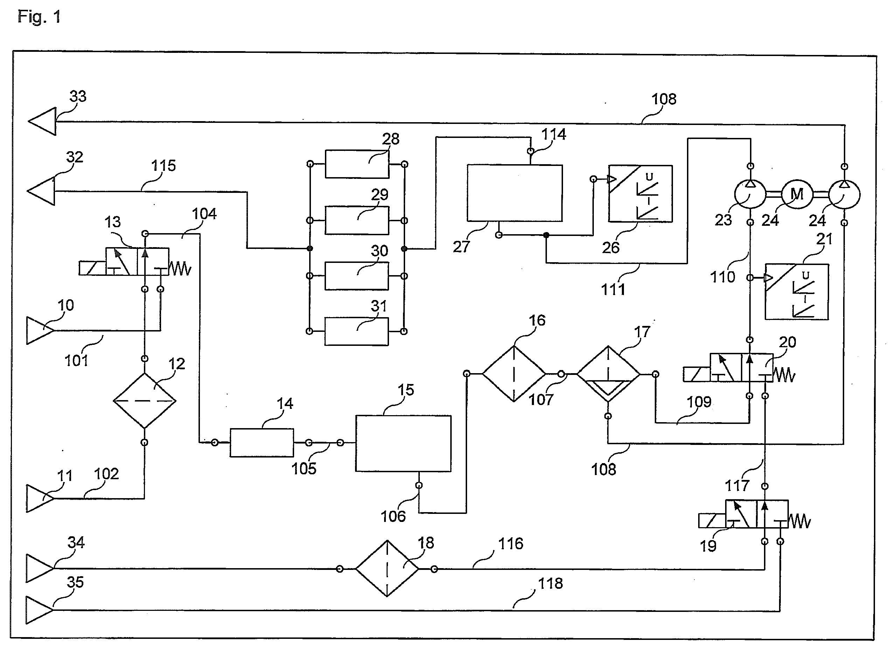

Fig. 1 zeigt schematisch einen Aufbau eines Messgeräts gemäß einem Ausführungsbeispiel der vorliegenden Erfindung. Das Messgerät umfasst eine Abgassonde 10, die in das Auspuffrohr des zu untersuchenden Fahrzeugs gebracht wird. Die vom Fahrzeug aufgenommenen Abgasproben werden über eine Abgassonden-Leitung 101 zu einem Nullpunktkalibrierventil 13 geleitet. Dieses Ventil ist ein 3/2 stromlos offen-Ventil um Abgasproben anzusaugen. Weiterhin verfügt das Messgerät über einen Umgebungslufteinlass 11. Die von der Umgebungsluft aufgenommenen Luftproben werden über eine Umgebungsluft-leitung 102 über einen Feinfilter 12 zu dem Nullpunktkalibrierventil 13. Durch wahlweises Umschalten des Nullpunktkalibrierventils 13 kann zwischen dem Ansaugen von Abgas- oder Umgebungsluft gewechselt werden.
Zur Kalibrierung der Partikelmesskammer wird "saubere" Luft aus dem Umgebungslufteinlass 11 verwendet.

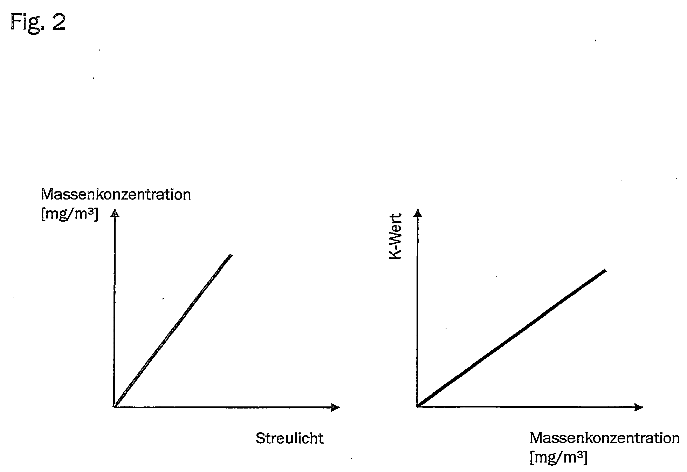

Stromab zu der Nullpunktkalibriereinheit 13 ist über eine Leitung 104 ein Heizelement 14 angeordnet. Die Abgase kühlen auf der ca. 1.5 m langen Leitungsstrecke von der Abgassonde 10 zum Heizelement 114 ab. Dadurch können durch Kondensation Wassertröpfchen in der Abgasluft entstehen, die zu optischen Störeffekten in der nachfolgend angeordneten Partikelmesskammer 15 führen könnte. Das Heizelement 14 erwärmt die Abgasproben und reduziert dadurch die Anzahl und Größe der Wassertröpfchen im Messgas. Über eine Partikelmesskammer-Leitung 105 wird das Messgas von dem Heizelement 14 in die Partikelmesskammer 15 geleitet. In der Partikelmesskammer 15 wird mittels eines Laserstreulichtverfahrens die Massenkonzentration in mg/m³ der im Abgas enthaltenden Rußpartikel bestimmt. Hierbei wird ein roter Laserstrahl in den Abgasstrahl gelenkt, wo dieser an den Abgasrußpartikeln gestreut wird. Diese Streuung des Laserlichts an den Abgasrußpartikeln wird über einen in der Partikelmesskammer 15 befindlichen optischen Empfänger (nicht gezeigt) detektiert, über einen angeschlossenen Verstärker (nicht gezeigt) verstärkt und anschließend in einer angeschlossenen Datenverarbeitungseinheit (nicht gezeigt) ausgewertet. Aus der Stärke des detektierten gestreuten Laserlichts wird die Massenkonzentration in mg/m³ der im Abgas enthaltenden Rußpartikel bestimmt. Dies ist im linken Schaubild in Fig. 2 illustriert, das beispielhaft und schematisch die Abhängigkeit der Massenkonzentration von dem Laserstreulicht der Partikelmesskammer zeigt.

Aus der ermittelten Massenkonzentration der Rußpartikel wird ein K-Wert in 1/m für die Opazität des Messgases mittels eines linearen Umrechnungsverfahrens errechnet. Die Erfinder haben bei Versuchsreihen festgestellt, dass die Messwerte der Massenkonzentration des laserbasierten Streulichtverfahrens linear mit dem K-Wert für die Opazität des Messgases korreliert sind. Dies ist im rechten Schaubild in Fig. 2 illustriert, das beispielhaft und schematisch den linearen Zusammenhang des K-Wertes der Opazität von der gemessenen Massenkonzentration zeigt. Daher können die von der Partikelmesskammer 15 mittels des Laserstreulichtverfahrens aufgenommenen Messwerte auch zur Bestimmung der Opazität verwendet werden. Dadurch ist keine separate Opazitätsmessvorrichtung notwendig. Dies ist besonders vorteilhaft, da gängige Opazitätsmessvorrichtungen ein LED-basiertes Messverfahren mit einer grünen LED einsetzen, die eine ca. 43cm lange Messzelle benötigen. Durch das erfindungsgemäße Laserstreulichtverfahren kann daher die Rußpartikelkonzentration und die Opazität der Abgase mittels einer äußerst kompakten Messzelle, die eine Höhe von 8 cm und einem kreisförmigen Querdurchmesser von 4 cm aufweist, bestimmt werden.

Stromab der Partikelmesskammer 15 ist über eine Feinfilterleitung 106 ein Feinfilter 16 angeordnet, stromab dieses Feinfilters 16 ist über eine Wasserabscheider-Leitung 107 ein Wasserabscheider 17 angeordnet. Mittels des Feinfilters 16 und des Wasserabscheiders 17 wird das Messgas für die IR-Messung von störenden Verunreinigungen und Feuchtigkeit gesäubert.

Das im Wasserabscheider 17 abgeschiedene Wasser wird mittels einer Wasserabscheiderpumpe 24 über eine Wasserauslass-Leitung 108 über den Wasserauslass 33 ausgeschieden. Stromab des Wasserabscheiders 17 ist über eine Messgas-Prüfleitung 109 zur Aufnahme des Messgases aus dem Wasserabscheider 17 ein Messgas-Prüfventil 20 angeordnet, das in Verbindung mit einer Leitung 117 ist, die mit einem Nullgasventil 19 verbunden ist. Das Messgas-Prüfventil 20 und das Nullgasventil 19 sind als 3/2 stromlos offen-Ventile ausgebildet. Über das Nullgasventil 19 wird dem Messgas-Prüfventil 20 ein Gemisch aus Umgebungsluft und Kalibriergas zugeführt. Die Umgebungsluft wird über einen Umgebungslufteinlass 34 angesaugt und durch einen Aktivkohlefilter 18 vor Eintritt in das Nullgasventil 19 gereinigt. Das Kalibriergas wird dem Nullgasventil 19 über eine Kalibriergassonde 35 zugeführt. Das Kalibriergas wird zur Kalibrierung der IR Messbank 27 verwendet.

Stromab der Messgas-Prüfeinheit 20 ist eine Messgaspumpe 23 angeordnet, die als Doppelmembranpumpen ausgebildet ist. Mittels der Messgaspumpe 23 werden die Messgase über eine IR-Messbank-Leitung 111 zur IR-Messbank 27 befördert.

Die IR-Messbank kann mittels einer Infrarotmessung die im Messgas enthaltenen CO-, CO₂- und HC- Anteile und zusätzlich den λ-Wert (Maß für den O₂-Partialdruck) ermitteln. Um weiterhin die O₂-, NO, NO₂ und NH₃-Anteile im Messgas bestimmen zu können, können stromab der IR-Messbank über eine Sensor-Leitung 114 ein O₂-Sensor 28, ein NO-Sensor 29, ein NO₂-Sensor 30 und ein NH₃-Sensor 31 in Parallelschaltung angeordnet sein. Über eine Gasauslassleitung 115 tritt das Messgas über einen Gasauslass 32 aus dem Messgerät aus.

Die Messgasleitungen 114 und 115 und die Anschlüsse für die Sensoren 29, 30 und 31 können auch wie in dem zuvor beschriebenen Ausführungsbeispiel eingerichtet sein, ohne jedoch die Sensoren 29, 30 und 31 vorzusehen. Diese können optional zu einem späteren Zeitpunkt nachgerüstet werden.

Zwischen der Messgaspumpe 23 und dem Wasserabscheider 17 ist ein Drucksensorelement 21 angeordnet; ein weiteres Drucksensorelement 26 ist zwischen der Messgaspumpe 23 und IR-Messbank 27 angeordnet. Diese Drucksensorelemente messen den Luftdruck, und können zudem Strom- und Spannungswerte beispielsweise der Messbank 27 aufnehmen. Aus den gemessenen Luftdruckwerten der Drucksensorelemente 21 und 26 kann beispielsweise erkannt werden, ob sich eine der Eingangssonden des Messgeräts im Wasser befindet. In diesem Fall kann das Messgerät abgeschaltet werden, um eine Beschädigung der Messtechnik durch Wassereintritt zu verhindern.

Die Messgaspumpe 23 wird von einem Pumpenmotor 22 angetrieben. Dieser Pumpenmotor 22 ist zwischen der Messgaspumpe 23 und der Wasserabscheiderpumpe 24 angeordnet und treibt weiterhin die Wasserabscheiderpumpe 24 an. Durch die erfindungsgemäße Verschlauchung, d.h. Leitungsverlegung im Messgerät, benötigt das erfindungsgemäße Messgerät im Unterschied zu den aus der einschlägigen Technik bekannten Messgeräten zur Messung der Rauchgastrübung, der Partikelkonzentration, sowie des CO-, CO₂-, HC-, O₂, NO, NO₂, NOₓ und NH₃ - Abgasanteils nur insgesamt einen Pumpenmotor 22, eine Messgaspumpe 23 und eine Wasserabscheiderpumpe 24.

Die erfindungsgemäße Kombination und Anordnung der Messgerätkomponenten ermöglicht ein multifunktionales Abgasmessgerät für alle gängigen Abgasmessarten, das eine quasi-simultane Messung der Rauchgastrübung, der Partikelkonzentration, sowie des CO-, CO₂-, HC-, O₂, NO, NO₂, NOₓ- und NH₃ - Abgasanteils ermöglicht. Die Messungen können auch kontinuierlich bzw. intermittierend erfolgen, wobei ein zeitlicher Unterschied von Sekunden-Bruchteilen zwischen den einzelnen Messungen liegen kann. Hierbei wird eine bestimmte Volumeneinheit des Messgases von der Abgassonde 10 durch die verschiedenen Messzelle und Sensoren geleitet. Mit anderen Worten werden die oben genannten Messungen auf Basis der gleichen Volumeneinheit des Messgases durchgeführt im Gegensatz zu aus der einschlägig bekannten Technik bekannten Messgeräte, wo mittels mehrerer unterschiedlicher Messgeräte mit jeweils eigener Abgassonde auf Basis unterschiedlicher Messgasvolumeneinheiten nacheinander gemessen wird.

Eine Zusammenfassung der oben erläuterten Aspekte sowie weiterer, auch alternativer, Aspekte wird nachfolgend angegeben:
So kann gemäß einem Aspekt ein Messgerät zur Bestimmung von mehreren Abgaskomponenten im Abgas von Verbrennungsmotoren vorliegen. Dieses Messgerät kann aufweisen: eine Abgassonde, eine Partikelmesskammer, einen Wasserabscheider, eine Infrarot-Messbank, einen O₂-Sensor und einen Gasauslass. Die Anordnung der vorgenannten Bauteile kann derart sein, dass ein Messgas über die Abgassonde eintritt, stromab zur Abgassonde die Partikelmesskammer angeordnet ist, stromab zur Partikelmesskammer der Wasserabscheider angeordnet ist, stromab zum Wasserabscheider die Infrarot-Messbank angeordnet ist, stromab zur Infrarot-Messbank der O₂-Sensor angeordnet ist, und das Messgas über den Gasauslass in die Umgebung austritt.

Ferner kann die Partikelmesskammer die Messgas-Partikelkonzentration mittels eines Laserstreulichtverfahrens messen.

Ferner kann aus einem durch die Partikelmesskammer ermittelten Messgas-Partikelkonzentrationswertes mittels eines linearen Umrechnungsverfahrens ein K-Wert für die Opazität des Messgases ermittelt werden.

Gemäß einem weiteren Aspekt kann das Messgerät nach zumindest einem der oben genannten Aspekte weiter einen Pumpenmotor, eine Messgaspumpe und eine

Wasserabscheiderpumpe umfassen. Der Pumpenmotor kann die Messgaspumpe und die Wasserabscheidepumpe antreiben.

Gemäß einem weiteren Aspekt kann die Messgaspumpe des vorbeschriebenen Aspektes in einer Messgasleitung zwischen dem Wasserabscheider und der Infrarot-Messbank angeordnet sein.

Gemäß einem weiteren Aspekt können die Messgaspumpe und die Wasserabscheiderpumpe als Doppelmembranpumpen ausgebildet sein.

Ferner kann das Messgas nach der IR-Messbank zu einem NO-Sensor und einem NO₂-Sensor geleitet werden, die zu dem O₂-Sensor parallel geschaltet sein können.

Ferner kann das Messgas nach der IR-Messbank zu einem NH₃-Sensor geleitet werden, der zu dem O₂-Sensor parallel geschaltet sein kann.

Ferner kann das Messgas vor Eintritt in die Partikelmesskammer ein Heizelement durchlaufen.

Ferner kann die Messung von mehreren Abgaskomponenten auf Basis einer definierten Abgasvolumeneinheit erfolgen. Dabei kann die Messung von mehreren Abgaskomponenten auf Basis der definierten Abgasvolumeneinheit quasi-simultan erfolgen.

Die einzelnen Merkmale der Erfindung sind selbstverständlich nicht auf die beschriebenen Kombinationen von Merkmalen in Rahmen der vorgestellten Ausführungsbeispiele beschränkt und können in Abhängigkeit vorgegebener Vorrichtungsparameter auch in anderen Kombinationen eingesetzt werden.

## Patentansprüche

1. Messgerät zur Bestimmung von mehreren Abgaskomponenten im Abgas von Verbrennungsmotoren, mit
- zumindest einem Gehäuse;
- zumindest einem Anzeige-Display zur Anzeige von Messwerten; und
- zumindest einer Spannungsversorgung;
wobei das Messgerät ferner
- zumindest eine Abgassonde (10) zum Einleiten von Messgas in das Messgerät; und
- zumindest einen Wasserabscheider (17), der stromab des an der Abgassonde (10) eingeleiteten Messgases angeordnet ist,
aufweist.

2. Messgerät gemäß Anspruch 1, ferner aufweisend
- zumindest eine Partikelmesskammer (15);
- zumindest eine Infrarot-Messbank (27);
- zumindest einen O₂-Sensor (28); und
- zumindest einen Gasauslass (33),
wobei die Anordnung der vorgenannten Bauteile derart ist, dass bei einem über über die Abgassonde (10) eintretenden Messgas, stromab zur Abgassonde (10) die Partikelmesskammer (15) und der Wasserabscheider (17) angeordnet sind, die Infrarot-Messbank (27) stromab zum Wasserabscheider (17) angeordnet ist, stromab zur Infrarot-Messbank (27) der O₂-Sensor (28) angeordnet ist, und das Messgas über den Gasauslass (33) in die Umgebung ausleitbar ist.

3. Messgerät gemäß Anspruch 1, wobei die Anordnung der Bauteile des Messgerätes derart ist, dass bei einem über die Abgassonde (10) eintretenden Messgas, stromab zur Abgassonde (10) eine Partikelmesskammer (15) angeordnet ist, stromab zum Wasserabscheider (17) die Infrarot-Messbank (27) angeordnet ist, stromab zur Infrarot-Messbank (27) der O₂-Sensor (28) angeordnet ist, und das Messgas über den Gasauslass (33) in die Umgebung ausleitbar ist.

4. Messgerät nach zumindest einem der voranstehenden Ansprüche,
**dadurch gekennzeichnet, dass** die Partikelmesskammer (15) die Messgas-Partikelkonzentration mittels eines Laserstreulichtverfahrens misst.

5. Messgerät nach zumindest einem der voranstehenden Ansprüche,
**dadurch gekennzeichnet, dass** aus einem durch die Partikelmesskammer (15) ermittelten Messgas-Partikelkonzentrationswertes mittels eines linearen Umrechnungsverfahrens ein K-Wert für die Opazität des Messgases ermittelt wird.

6. Messgerät nach zumindest einem der voranstehenden Ansprüche, das
weiter einen Pumpenmotor (22), eine Messgaspumpe (23) und eine Wasserabscheiderpumpe (24) umfasst, wobei der Pumpenmotor (22) die Messgaspumpe (23) und die Wasserabscheidepumpe (24) antreibt.

7. Messgerät nach Anspruch 6, **dadurch gekennzeichnet, dass** die Messgaspumpe (22) in einer Messgasleitung zwischen dem Wasserabscheider (17) und der Infrarot-Messbank (27) angeordnet ist.

8. Messgerät nach Anspruch 6 oder 7, **dadurch gekennzeichnet, dass** die
Messgasumpe (22) und die Wasserabscheiderpumpe (23) als Doppelmembranpumpen ausgebildet sind.

9. Messgerät nach zumindest einem der voranstehenden Ansprüche,
wobei das Messgas nach der IR-Messbank (27) zu einem NO-Sensor (29) und einem NO₂-Sensor (30) geleitet wird, die zu dem O₂-Sensor (28) parallel geschaltet sind.

10. Messgerät nach zumindest einem der voranstehenden Ansprüche,
wobei das Messgas nach der IR-Messbank (27) zu einem NH₃-Sensor (31) geleitet wird, der zu dem O₂-Sensor (28) parallel geschaltet ist.

11. Messgerät nach zumindest einem der voranstehenden Ansprüche,
wobei das Messgas vor Eintritt in die Partikelmesskammer (15) ein Heizelement (14) durchläuft.

12. Messgerät nach zumindest einem der voranstehenden Ansprüche,
wobei die Messung von mehreren Abgaskomponenten auf Basis einer definierten Abgasvolumeneinheit erfolgt.

13. Messgerät nach Anspruch 10, wobei die Messung von mehreren
Abgaskomponenten auf Basis der definierten Abgasvolumeneinheit quasi-simultan erfolgt.
